# EUROPEAN PATENT APPLICATION

(11) **EP 3 434 725 A1**
(43) Date of publication of application: **30.01.2019**
(21) Application number: 17769599.6
(22) Date of filing: 13.01.2017
(51) Int. Cl.: C08L 15/00, B60C 1/00, C08C 19/38, C08F 136/06, C08K 3/04, C08K 3/36, C08L 7/00, C08L 9/00

(54) **RUBBER COMPOSITION, CROSSLINKED RUBBER COMPOSITION, AND RUBBER PRODUCT**

(30) Priority: 24.03.2016 JP 2016060638
(71) Applicant: Bridgestone Corporation, Tokyo 104-8340 (JP)
(72) Inventor: YAMAGATA Yusuke, Tokyo 104-8340 (JP); KAITA Shojiro, Tokyo 104-8340 (JP)
(74) Representative: Lang, Johannes
(86) International application number: PCT/JP2017/001062
(87) International publication number: WO 2017/163552

(57) **Abstract**

Provided is a rubber composition that contains a rubber component having excellent cold flow resistance and has improved low loss property and wear resistance as compared to conventional ones. The rubber composition comprises: a modified conjugated diene-based polymer having a hydroxyl group at a terminal; and at least one of a natural rubber or a polyisoprene rubber. The modified conjugated diene-based polymer preferably has a cis-1,4 bond content of 95% or more; the modified conjugated diene-based polymer preferably has a molecular weight distribution (Mw/Mn) of 2.5 or less; and a content of the modified conjugated diene-based polymer in a rubber component is preferable to be 20 mass% or more.

## Description

### TECHNICAL FIELD

This disclosure relates to a rubber composition, a crosslinked rubber composition and a rubber product.

### BACKGROUND

Recently, requirement to low fuel consumption of automobile is growing, and a tire with small rolling resistance is desired. Therefore, as a rubber composition used in a tread, etc. of a tire, a rubber composition with low tan *δ* (hereinafter referred to as low loss property) and excellent low heat generating property is desired. Moreover, from a viewpoint of safety and economy, a rubber composition for tire is required to have excellent wear resistance.

Further, in a rubber product other than tire as well, from a viewpoint of energy loss reduction, safety and product durability, improvement of low loss property and wear resistance is required.

Regarding this, in order to improve low loss property and wear resistance of a rubber composition with a reinforcing filler such as carbon black, silica and the like compounded to a rubber component, it is effective to improve affinity of the reinforcing filler and the rubber component in the rubber composition, and to improve dispersity of the reinforcing filler in the rubber composition.

For example, as described in JP 2009-221203 A (PTL1) and WO 2007/034785 A1 (PTL2), in order to improve affinity of a reinforcing filler and a rubber component in a rubber composition, modified conjugated diene-based polymers having improved affinity with a reinforcing filler through terminal modification have been developed as a rubber component.

### CITATION LIST

### Patent Literature

PTL1: JP 2009-221203 A
PTL2: WO 2007/034785 A1

### SUMMARY

### (Technical Problem)

However, as a result of study, we discovered that a rubber composition prepared by using the modified conjugated diene-based polymer as described in PTL1 or PTL2 cannot be said as having sufficient low loss property and wear resistance, and there is still room for improving the modified conjugated diene-based polymers.

On the other hand, in a linear conjugated diene-based polymer such as butadiene polymer, a phenomenon that the polymer flows due to its own weight or any load applied to it during transportation or storage, a.k.a. "cold flow", is likely to occur, which causes a problem for handling it. Therefore, a rubber component used in a rubber composition is preferably one having excellent cold flow resistance and excellent storage stability.

It would thus be helpful to provide a rubber composition that contains a rubber component having excellent cold flow resistance and has improved low loss property and wear resistance as compared to conventional ones.

Moreover, it would be helpful to provide a crosslinked rubber composition obtained by crosslinking such rubber composition, and a rubber product using such rubber composition.

### (Solution to Problem)

A summary of this disclosure for solving the aforementioned problem is as follows.

The rubber composition of this disclosure comprises: a modified conjugated diene-based polymer having a hydroxyl group at a terminal; and at least one of a natural rubber or a polyisoprene rubber.

Such rubber composition of this disclosure contains a modified conjugated diene-based polymer having a hydroxyl group at a terminal, which has excellent cold flow resistance, and has improved low loss property and wear resistance.

In the rubber composition of this disclosure, it is preferable that the modified conjugated diene-based polymer has a cis-1,4 bond content of 95% or more. In this case, it is possible to further improve wear resistance of the rubber composition.

In the rubber composition of this disclosure, it is preferable that the modified conjugated diene-based polymer has a molecular weight distribution (Mw/Mn) of 2.5 or less. In this case, operability of the rubber composition is improved, and kneading becomes easy.

In this disclosure, the molecular weight distribution of the modified conjugated diene-based polymer is represented by the ratio (Mw/Mn) of the weight-average molecular weight (Mw) and the number-average molecular weight (Mn). Here, the weight-average molecular weight (Mw) and the number-average molecular weight (Mn) are polystyrene equivalent values obtained through gel permeation chromatography (GPC).

In a preferable example of the rubber composition of this disclosure, a content of the modified conjugated diene-based polymer in the rubber component is 20 mass% or more. In this case, improvement effect of low loss property and wear resistance of the rubber composition is enhanced.

In another preferable example of the rubber composition of this disclosure, the modified conjugated diene-based polymer is a modified butadiene polymer. In this case, low loss property of the rubber composition is further improved.

It is preferable that the rubber composition of this disclosure further contains carbon black and silica. In this case, low loss property and wear resistance of the rubber composition is further improved.

Here, it is preferable that a content of the carbon black is more than a content of the silica. In this case, wear resistance of the rubber composition is further improved.

Further, it is preferable that the content of the carbon black is more than 2 times of the content of the silica. In this case, wear resistance of the rubber composition is further improved.

The crosslinked rubber composition of this disclosure is a crosslinking product of the aforementioned rubber composition.

Such crosslinked rubber composition of this disclosure has excellent low loss property and wear resistance.

The rubber product of this disclosure uses the aforementioned rubber composition or crosslinked rubber composition.

Such rubber product of this disclosure has low energy loss, low heat generation, high wear resistance, and long product durability.

It is preferable that the rubber product of this disclosure is a tire. Such tire of this disclosure has small rolling resistance, excellent fuel efficiency, and excellent wear resistance as well.

### (Advantageous Effect)

According to this disclosure, it is possible to provide a rubber composition that contains a rubber component having excellent cold flow resistance and has improved low loss property and wear resistance as compared to conventional ones.

Moreover, according to this disclosure, it is possible to provide a crosslinked rubber composition obtained by crosslinking such rubber composition, and to provide a rubber product using such rubber composition.

### DETAILED DESCRIPTION

Hereinafter, the rubber composition, the crosslinked rubber composition and the rubber product of this disclosure are described in details based on their embodiments.

### <Rubber composition>

The rubber composition of this disclosure includes: a modified conjugated diene-based polymer having a hydroxyl group at a terminal; and at least one of a natural rubber or a polyisoprene rubber.

By modifying the terminal of the conjugated diene-based polymer and disposing a hydroxyl group at the terminal, it is possible to improve cold flow resistance of the conjugated diene-based polymer. Moreover, by using such modified conjugated diene-based polymer having a hydroxyl group at a terminal so as to prepare a rubber composition, it is possible to improve low loss property and wear resistance of the rubber composition. Further, although the reason is still uncertain, by blending the modified conjugated diene-based polymer having a hydroxyl group at a terminal and a natural rubber and/or a polyisoprene rubber so as to prepare a rubber composition, it is possible to greatly improve low loss property and wear resistance of the rubber composition.

In the rubber composition of this disclosure, the modified conjugated diene-based polymer preferably has a cis-1,4 bond content of 95% or more, more preferably 97% or more, and even more preferably 98% or more. By using a modified conjugated diene-based polymer having a cis-1,4 bond content of 95% or more to a rubber composition, it is possible to improve mechanical characteristics of the rubber composition, and to further improve wear resistance of the rubber composition.

In the rubber composition of this disclosure, the modified conjugated diene-based polymer preferably has a molecular weight distribution (Mw/Mn) of 2.5 or less, more preferably 2.2 or less, and even more preferably 1.8 or less. By using a modified conjugated diene-based polymer having a molecular weight distribution (Mw/Mn) of 2.5 or less to a rubber composition, operability of the rubber composition is improved, and kneading becomes easy.

The modified conjugated diene-based polymer having a hydroxyl group at a terminal may be manufactured through, for example, the following first reaction, second reaction, third reaction, and as necessary, other processes.

### <<First reaction>>

The first reaction performs polymerization by using a raw material monomer containing at least a conjugated diene compound, an organic aluminum compound, and a rare earth element compound-containing catalyst.

In the first reaction, for example, in the case of using 1,3-butadiene as a raw material monomer, a reaction as represented by the following chemical reaction formula (1) occurs.

AlR₃+3nCH₂=CH-CH=CH₂ → Al[-(CH₂-CH=CH-CH₂)ₙ-R]₃ ... (1)

Note that in the chemical reaction formula (1), R represents a hydrocarbon group or a hydrogen atom, and n represents any natural number.

The reaction temperature in the first reaction is not specifically limited and may be appropriately selected depending on the purpose. The reaction temperature is preferably room temperature (20°C) to 120°C, more preferably 30°C to 100°C, and particularly preferably 40°C to 80°C. A reaction temperature lower than room temperature (20°C) may raise the cost for temperature adjustment, and a reaction temperature higher than 120°C may generate a by-product. On the other hand, the reaction temperature in the particularly preferable range is beneficial from a viewpoint of production cost.

The reaction pressure in the first reaction generally has a lower limit of 1 kgf/cm² (kg/cm²). The reaction pressure does not have an upper limit, but 100 kgf/cm² is preferable from an industrial viewpoint. Namely, the reaction pressure in the first reaction is not specifically limited and may be appropriately selected depending on the purpose, but is preferably 1 kgf/cm² to 100 kgf/cm², more preferably 5 kgf/cm² to 50 kgf/cm², and particularly preferably 10 kgf/cm² to 30 kgf/cm². A reaction pressure of less than 1 kgf/cm² may require enormous reaction time, and a reaction pressure of more than 100 kgf/cm² may be unpreferable from an industrial viewpoint. On the other hand, the reaction pressure in the particularly preferable range is beneficial from a viewpoint of reaction efficiency.

The reaction time in the first reaction is not specifically limited and may be appropriately selected depending on the purpose, but is preferably 1 second to 24 hours, more preferably 10 minutes to 10 hours, and particularly preferably 1 hour to 8 hours. A reaction time of less than 1 second may be incapable of allowing the reaction to proceed sufficiently, and a reaction time of more than 24 hours may be unpreferable from an industrial viewpoint. On the other hand, the reaction time in the particularly preferable range is beneficial from a viewpoint of production efficiency.

It is preferable that the first reaction is performed under an atmosphere of an inactive gas, preferably nitrogen gas or argon gas.

The solvent used in the first reaction is not specifically limited and may be appropriately selected depending on the purpose. Examples include toluene, n-hexane, cyclohexane, and the like. These may be used alone or in a combination of two or more. Among these, toluene is preferable from a viewpoint of solubility of polymer.

### -Raw material monomer-

The raw material monomer contains at least a conjugated diene compound, and may contain another monomer copolymerizable with the conjugated diene compound. The amount of the raw material monomer is not specifically limited and may be appropriately selected depending on the purpose, but is preferably 10 times to 1,000,000 times in mol, more preferably 20 times to 100,000 times in mol, and particularly preferably 50 times to 10,000 times in mol with respect to the alkylaluminum described below. An amount of less than 10 times in mol may be incapable of raising the molecular weight, and an amount of more than 1,000,000 times in mol may be incapable of allowing the reaction to proceed sufficiently. On the other hand, the amount in the particularly preferable range is beneficial from a viewpoint of reaction efficiency.

The conjugated diene compound is used as a monomer, and preferably has a carbon number of 4 to 12. Specific examples of the conjugated diene compound include 1,3-butadiene, isoprene, 1,3-pentadiene, 2,3-dimethylbutadiene, and the like. Among these, 1,3-butadiene and isoprene are preferable, and 1,3-butadiene is particularly preferable. These conjugated diene compounds may be used alone or in combination of two or more. The content of the conjugated diene compound is not specifically limited and may be appropriately selected depending on the purpose, but is preferably 50 mass% or more of the raw material monomer, and more preferably 80 mass% or more of the raw material monomer.

The other monomer copolymerizable with the conjugated diene compound is not specifically limited and may be appropriately selected depending on the purpose. Examples include styrene, norbornene, dicyclopentadiene, and the like. These may be used alone or in a combination of two or more. Among these, styrene is preferable from a viewpoint of reactivity.

### -Organic aluminum compound-

The organic aluminum compound is preferably a compound represented by the following general formula (X):

AlR¹R²R³ ... (X)

where R¹ and R² are the same or different hydrocarbon groups each having a carbon number of 1 to 10 or a hydrogen atom, and R³ is a hydrocarbon group having a carbon number of 1 to 10, in which R³ may be the same as or different from R¹ or R² above.

Specific examples of the organic aluminum compound are not specifically limited and may be appropriately selected depending on the purpose. The examples include trimethyl aluminum, triethyl aluminum, tri-n-propyl aluminum, triisopropyl aluminum, tri-n-butyl aluminum, triisobutyl aluminum, tri-t-butyl aluminum, tripentyl aluminum, trihexyl aluminum, tricyclohexyl aluminum, trioctyl aluminum; diethylaluminum hydride, di-n-propyl aluminum hydride, di-n-butyl aluminum hydride, diisobutyl aluminum hydride, dihexyl aluminum hydride, diisohexyl aluminum hydride, dioctyl aluminum hydride, diisooctyl aluminum hydride; ethyl aluminum dihydride, n-propyl aluminum dihydride, and isobutyl aluminum dihydride. Among these, triethyl aluminum, triisobutyl aluminum, diethyl aluminum hydride, and diisobutyl aluminum hydride are preferable. These organic aluminum compounds may be contained alone or in combination of two or more.

### -Rare earth element compound-containing catalyst-

The rare earth element compound-containing catalyst is not specifically limited and may be appropriately selected depending on the purpose as long as it is a catalyst containing a rare earth element compound or a reactant resulted from a reaction between the rare earth element compound and a Lewis base [component (A)]. Examples include the first rare earth element compound-containing catalyst and the second rare earth element compound-containing catalyst as described below. These may be used alone or in a combination of two or more.

The amount of the rare earth element compound-containing catalyst is preferably 0.000001 times to 0.1 times in mol, more preferably 0.000002 times to 0.01 times in mol, and particularly preferably 0.000005 times to 0.001 times in mol with respect to the total amount of the raw material monomer. An amount of less than 0.000001 times in mol may be incapable of allowing the reaction to proceed sufficiently, and an amount of more than 0.1 times in mol may be incapable of raising the molecular weight. On the other hand, an amount in the particularly preferable range is beneficial from a viewpoint of production cost.

The component (A) is a rare earth element compound or a reactant of the rare earth element compound and a Lewis base. Here, a rare earth element compound or a reactant of the rare earth element compound and a Lewis base may be one without a direct bond of the rare earth element and carbon. In the case where the rare earth element compound or the reaction product does not have a rare earth element-carbon bond, the compound may become stable and easy to handle. Here, the rare earth element compound refers to a compound containing a lanthanoid element, scandium, or yttrium. The lanthanoid elements include elements with atomic numbers 57 to 71 of the periodic table. Specific examples of the lanthanoid element include lanthanum, cerium, praseodymium, neodymium, promethium, samarium, europium, gadolinium, terbium, dysprosium, holmium, erbium, thulium, ytterbium, and lutetium. These components (A) may be contained alone or in combination of two or more.

The rare earth element compound is preferably composed of a rare earth metal of a bivalent or trivalent salt or of a complex compound, and even more preferably a rare earth element compound containing at least one or two ligand selected from a hydrogen atom, a halogen atom, and an organic compound residue. Further, the rare earth element compound or the reactant of the rare earth element compound and the Lewis base is represented by the following general formula (XI) or (XII):

M¹¹X¹¹₂·L¹¹w ... (XI)

M¹¹X¹¹₃·L¹¹w ... (XII)

where: M¹¹ represents a lanthanoid element, scandium, or yttrium; X¹¹ each independently represent a hydrogen atom, a halogen atom, an alkoxy group, a thiolate group, an amide group, a silyl group, an aldehyde residue, a ketone residue, a carboxylic acid residue, a thiocarboxylic acid residue, a phosphorous compound residue, an unsubstituted or substituted cyclopentadienyl, or an unsubstituted or substituted indenyl; L¹¹ represents a Lewis base; and w represents 0 to 3.

Specific examples of a group (ligand) to form a bond to the rare earth element of the rare earth element compound include: a hydrogen atom; aliphatic alkoxy groups such as methoxy group, ethoxy group, propoxy group, n-butoxy group, isobutoxy group, sec-butoxy group, and tert-butoxy group; phenoxy group, 2,6-di-tert-butylphenoxy group, 2,6-diisopropylphenoxy group, 2,6-dineopentylphenoxy group, 2-tert-butyl-6-isopropylphenoxy group, 2-tert-butyl-6-neopentylphenoxy group, and 2-isopropyl-6-neopentylphenoxy group; aliphatic thiolate groups such as thiomethoxy group, thioethoxy group, thiopropoxy group, thio-n-butoxy group, thioisobutoxy group, thio-sec-butoxy group, and thio-tert-butoxy group; aryl thiolate groups such as thiophenoxy group, 2,6-di-tert-butylthiophenoxy group, 2,6-diisopropylthiophenoxy group, 2,6-dineopentylthiophenoxy group, 2-tert-butyl-6-isopropylthiophenoxy group, 2-tert-butyl-6-thioneopentylphenoxy group, 2-isopropyl-6-thioneopentylphenoxy group, and 2,4,6-triisopropylthiophenoxy group; aliphatic amide groups such as dimethyl amide group, diethyl amide group, diisopropyl amide group; arylamide groups such as phenyl amide group, 2,6-di-tert-butylphenyl amide group, 2,6-diisopropylphenyl amide group, 2,6-dineopentylphenyl amide group, 2-tert-butyl-6-isopropylphenyl amide group, 2-tert-butyl-6-neopentylphenyl amide group, 2-isopropyl-6-neopentylphenyl amide group, and 2,4,6-tert-butylphenyl amide group; bistrialkylsilyl amide groups such as bistrimethylsilyl amide group; silyl groups such as trimethylsilyl group, tris(trimethylsilyl)silyl group, bis(trimethylsilyl)methylsilyl group, trimethylsilyl(dimethyl)silyl group, and triisopropylsilyl(bistrimethylsilyl)silyl group; halogen atoms such as a fluorine atom, a chlorine atom, a bromine atom, and an iodine atom. Other examples may include: residues of aldehyde such as salicylaldehyde, 2-hydroxy-1-naphthaldehyde, and 2-hydroxy-3-naphthaldehyde; residues of hydroxyphenone such as 2'-hydroxyacetophenone, 2'-hydroxybutyrophenone, and 2'-hydroxypropiophenone; residues of diketone such as acetylacetone, benzoylacetone, propionylacetone, isobutyl acetone, valerylacetone, and ethylacetylacetone; residues of carboxylic acid such as isovaleric acid, caprylic acid, octanoic acid, lauric acid, myristic acid, palmitic acid, stearic acid, isostearic acid, oleic acid, linoleic acid, cyclopentanecarboxylic acid, naphthenic acid, ethylhexanoic acid, pivalic acid, versatic acid (trade name of a product manufactured by Shell Chemicals Japan Ltd., synthetic acid composed of a mixture of C10 monocarboxylic acid isomers), phenylacetic acid, benzoic acid, 2-naphthoic acid, maleic acid, and succinic acid; residues of thiocarboxylic acid such as hexanethioic acid, 2,2-dimethylbutanethioic acid, decanethioic acid, and thiobenzoic acid; residues of phosphoric acid ester such as dibutyl phosphate, dipentyl phosphate, dihexyl phosphate, diheptyl phosphate, dioctyl phosphate, bis(2-ethylhexyl) phosphate, bis(1-methylheptyl) phosphate, dilauryl phosphate, dioleyl phosphate, diphenyl phosphate, bis(p-nonylphenyl) phosphate, bis(polyethylene glycol-p-nonylphenyl) phosphate, (butyl)(2-ethylhexyl) phosphate, (1-methylheptyl)(2-ethylhexyl) phosphate, and (2-ethylhexyl)(p-nonylphenyl) phosphate; residues of phosphonic acid ester such as monobutyl 2-ethylhexylphosphate, mono-2-ethylhexyl 2-ethylhexylphosphate, mono-2-ethylhexyl phenylphosphate, mono-p-nonylphenyl 2-ethylhexylphosphate, mono-2-ethylhexyl phosphate, mono-1-methylheptyl phosphate, and mono-p-nonylphenyl phosphate; residues of phosphinic acid such as dibutylphosphinic acid, bis(2-ethylhexyl)phosphinic acid, bis(1-methylheptyl)phosphinic acid, dilaurylphosphinic acid, dioleylphosphinic acid, diphenylphosphinic acid, bis(p-nonylphenyl)phosphinic acid, butyl(2-ethylhexyl)phosphinic acid, (2-ethylhexyl)(1-methylheptyl)phosphinic acid, (2-ethylhexyl)(p-nonylphenyl)phosphinic acid, butylphosphinic acid, 2-ethylhexylphosphinic acid, 1-methylheptylphosphinic acid, oleylphosphinic acid, laurylphosphinic acid, phenylphosphinic acid, and p-nonylphenylphosphinic acid; unsubstituted cyclopentadienyls; substituted cyclopentadienyls such as tetramethylcyclopentadienyl group and pentamethylcyclopentadienyl group; unsubstituted indenyls; and substituted indenyls such as 1,2,3-trimethyl indenyl, heptamethylindenyl, and 1,2,4,5,6,7-hexamethylindenyl.

These ligands may be used alone or in combination of two or more.

In the rare earth element compound-containing catalyst, examples of the Lewis base to react with the rare earth element compound may include: tetrahydrofuran, diethyl ether, dimethylaniline, trimethylphosphine, lithium chloride, neutral olefins, and neutral diolefins. Here, in the case where the rare earth element compound reacts with a plurality of Lewis bases (in the case where w is 2 or 3 in Formulae (XI) and (XII)), the Lewis base L¹¹ in each Formula may be the same as or different from each other.

The rare earth element compound-containing catalyst may further contain a component (B), which is at least one compound selected from the group consisting of:
an ionic compound (B-1) composed of a non-coordinating anion and a cation;
an aluminoxane (B-2);
at least one halogen compound (B-3) among a Lewis acid, a complex compound of a metal halide and a Lewis acid, or an organic compound containing an active halogen; and
at least one compound (B-4) selected from the group consisting of a substituted or unsubstituted cyclopentadiene, indene and fluorene.

It is preferable that the total content of the component (B) in the rare earth element compound-containing catalyst is 0.1 times to 50 times in mol with respect to the component (A).

The ionic compound represented by (B-1) is composed of a non-coordinating anion and a cation, and an example thereof includes: an ionic compound that reacts with the rare earth element compound as the component (A) or with the reactant resulting from a Lewis base and the rare earth element compound, so as to form a cationic transition metal compound.

In this connection, examples of the non-coordinating anion include tetraphenyl borate, tetrakis(monofluorophenyl)borate, tetrakis(difluorophenyl)borate, tetrakis(trifluorophenyl)borate, tetrakis(tetrafluorophenyl)borate, tetrakis(pentafluorophenyl)borate, tetrakis(tetrafluoromethylphenyl)borate, tetra(tolyl)borate, tetra(xylyl)borate, (triphenyl, pentafluorophenyl)borate, [tris(pentafluorophenyl), phenyl]borate, tridecahydride-7,8-dicarbaundecaborate, and the like.

Examples of the cation include carbonium cation, oxonium cation, ammonium cation, phosphonium cation, cycloheptatrienyl cation, ferrocenium cation having transition metal, and the like. Specific examples of the carbonium cation include trisubstituted carbonium cations such as triphenylcarbonium cation, tri(substituted phenyl)carbonium cation, and the like. Specific examples of the tri(substituted phenyl)carbonyl cation include tri(methylphenyl)carbonium cation, tri(dimethylphenyl)carbonium cation, and the like. Specific examples of the ammonium cation include: trialkylammonium cations such as trimethylammonium cation, triethylammonium cation, tripropylammonium cation, tributylammonium cation (e.g., tri(n-butyl)ammonium cation); N,N-dialkylanilinium cations such as N,N-dimethylanilinium cation, N,N-diethylanilinium cation, N,N-2,4,6-pentamethylanilinium cation, and the like; and dialkylammonium cations such as diisopropylammonium cation, dicyclohexylammonium cation, and the like. Specific examples of the phosphonium cation include triarylphosphonium cations such as triphenylphosphonium cation, tri(methylphenyl)phosphonium cation, tri(dimethylphenyl)phosphonium cation, and the like.

A compound that is a combination of a non-coordinating anion and a cation selected from the aforementioned examples, respectively, is preferably used as the ionic compound. Specific examples of the ionic compound include N,N-dimethylanilinium tetrakis(pentafluorophenyl)borate, triphenylcarbonium tetrakis(pentafluorophenyl)borate, and the like. These ionic compounds may be contained alone or in combination of two or more. The content of the ionic compound in the aforementioned rare earth element compound-containing catalyst is preferably 0.1 times to 10 times in mol, and more preferably approximately 1 time in mol with respect to the component (A).

The aluminoxane represented by the aforementioned (B-2) is a compound obtained by rendering an organic aluminum compound and a condensing agent contact with each other, for example, a linear aluminoxane or a circular aluminoxane having a repeating unit represented by the general formula: (-Al(R')O-), where R' is a hydrocarbon group having a carbon number of 1 to 10, where a part of the hydrocarbon group may be substituted with halogen atom and/or alkoxy group, and the degree of polymerization of the repeating unit is preferably 5 or more, and more preferably 10 or more. Here, specific examples of R' include methyl group, ethyl group, propyl group, and isobutyl group, with the methyl group being preferred. In addition, the organic aluminum compound used as a material of aluminoxane may be a trialkyl aluminum such as trimethyl aluminum, triethyl aluminum, tributyl aluminum, triisobutyl aluminum, etc., or a mixture thereof, and is particularly preferably trimethyl aluminum. For example, an aluminoxane obtained by using a mixture of trimethyl aluminum and tributyl aluminum as a raw material is suitably used. Provided that "Al/M" represents an element ratio of the aluminum element Al of the aluminoxane with respect to the rare earth element M constituting the component (A), the content of the aluminoxane in the rare earth element compound-containing catalyst is set such that the element ratio Al/M is approximately 10 to 1000.

The halogen compound represented by (B-3) is composed of at least one of: a Lewis acid; a complex compound of a metal halide and a Lewis base; or an organic compound containing active halogen, and is capable of reacting with, for example, the rare earth element compound as the component (A) or with the reactant resulting from Lewis base and the rare earth element compound, so as to form a cationic transition metal compound, a halogenated transition metal compound, or a compound with a charge-deficient transition metal center. The content of the halogen compound in the rare earth element compound-containing catalyst is preferably 1 time to 5 times in mol, with respect to the component (A).

Examples of the Lewis acid may include: a boron-containing halogen compound such as B(C₆F₅)₃ and an aluminum-containing halogen compound such as Al(C₆F₅)₃, and may also include a halogen compound containing an element of Group III, Group IV, Group V, Group VI, or Group VIII of the periodic table. Preferably, aluminum halides or organic metal halides may be used. Preferred examples of the halogen element include chlorine and bromine. Specific examples of the Lewis acid include methyl aluminum dibromide, methyl aluminum dichloride, ethyl aluminum dibromide, ethyl aluminum dichloride, butyl aluminum dibromide, butyl aluminum dichloride, dimethyl aluminum bromide, dimethyl aluminum chloride, diethyl aluminum bromide, diethyl aluminum chloride, dibutyl aluminum bromide, dibutyl aluminum chloride, methyl aluminum sesquibromide, methyl aluminum sesquichloride, ethyl aluminum sesquibromide, ethyl aluminum sesquichloride, dibutyltin dichloride, aluminum tribromide, antimony trichloride, antimony pentachloride, phosphorus trichloride, phosphorus pentachloride, tin tetrachloride, titanium tetrachloride, tungsten hexachloride, and the like. Diethyl aluminum chloride, ethyl aluminum sesquichloride, ethyl aluminum dichloride, diethyl aluminum bromide, ethyl aluminum sesquibromide, and ethyl aluminum dibromide are particularly preferable as the Lewis acid among these examples.

Examples of the metal halide in the complex compound of the metal halide and the Lewis base include beryllium chloride, beryllium bromide, beryllium iodide, magnesium chloride, magnesium bromide, magnesium iodide, calcium chloride, calcium bromide, calcium iodide, barium chloride, barium bromide, barium iodide, zinc chloride, zinc bromide, zinc iodide, cadmium chloride, cadmium bromide, cadmium iodide, mercury chloride, mercury bromide, mercury iodide, manganese chloride, manganese bromide, manganese iodide, rhenium chloride, rhenium bromide, rhenium iodide, copper chloride, copper bromide, copper iodide, silver chloride, silver bromide, silver iodide, gold chloride, gold iodide, and gold bromide. Of these, magnesium chloride, calcium chloride, barium chloride, manganese chloride, zinc chloride, and copper chloride are preferable, and magnesium chloride, manganese chloride, zinc chloride, and copper chloride are particularly preferable.

The Lewis base in the complex compound of the metal halide and the Lewis base is preferably a phosphorous compound, a carbonyl compound, a nitrogen compound, an ether compound, an alcohol, and the like. Specific examples thereof include: tributyl phosphate, tri-2-ethylhexyl phosphate, triphenyl phosphate, tricresyl phosphate, triethylphosphine, tributylphosphine, triphenylphosphine, diethylphosphinoethane, diphenylphosphinoethane, acetylacetone, benzoylacetone, propionitrileacetone, valerylacetone, ethylacetylacetone, methyl acetoacetate, ethyl acetoacetate, phenyl acetoacetate, dimethyl malonate, diethyl malonate, diphenyl malonate, acetic acid, octanoic acid, 2-ethylhexoic acid, oleic acid, stearic acid, benzoic acid, naphthenic acid, versatic acid, triethylamine, N,N-dimethylacetamide, tetrahydrofuran, diphenyl ether, 2-ethylhexyl alcohol, oleyl alcohol, stearyl alcohol, phenol, benzyl alcohol, 1-decanol, and a lauryl alcohol. Among these, preferred are tri-2-ethylhexyl phosphate, tricresyl phosphate, acetylacetone, 2-ethylhexoic acid, versatic acid, 2-ethylhexyl alcohol, 1-decanol, and lauryl alcohol.

The Lewis base mentioned above is brought to reaction at a ratio of 0.01 to 30 mol, preferably 0.5 to 10 mol per mol of the metal halide mentioned above. A reaction product with the Lewis base at this ratio allows a reduction in metal remaining in the polymer.

The organic compound including the active halogen is benzyl chloride and the like.

The compound represented by (B-4) is selected from the group consisting of substituted or unsubstituted cyclopentadiene, indene and fluorene, namely, a cyclopentadiene, a substituted cyclopentadiene, an indene, a substituted indene, a fluorene, and a substituted fluorene.

Here, examples of a substituent of the substituted cyclopentadiene, the substituted indene, and the substituted fluorene include a hydrocarbyl group and a metalloid group. The carbon number of the hydrocarbyl group is preferably 1 to 20, more preferably 1 to 10, and even more preferably 1 to 8. Specifically, preferable examples of the hydrocarbyl group include methyl group, ethyl group, phenyl group, benzyl group and the like. Examples of metalloid of the metalloid group include germyl Ge, stannyl Sn, and silyl Si. The metalloid group preferably includes a hydrocarbyl group which is defined in the same manner as the aforementioned hydrocarbyl group. Specific examples of the metalloid group include trimethylsilyl and the like.

The cyclopentadiene and the substituted cyclopentadiene have a cyclopentadienyl group. Here, examples of the substituted cyclopentadiene include tetramethylcyclopentadiene and pentamethylcyclopentadiene.

Moreover, the indene and the substituted indene have an indenyl group. Examples of the substituted indene include 2-phenyl-1H-indene, 3-benzyl-1H-indene, 3-methyl-2-phenyl-1H-indene, 3-benzyl-2-phenyl-1H-indene, 1-benzyl-1H-indene, and the like. In particular, from a viewpoint of reducing the molecular weight distribution, 3-benzyl-1H-indene and 1-benzyl-1H-indene are preferable.

Moreover, the fluorene and the substituted fluorene include a fluorenyl group. Here, examples of the substituted fluorene include trimethylsilyl fluorene and 9-methyl-9H-fluorene.

The aforementioned configuration increases conjugated electrons of the compound (B-4), and thereby further improves catalytic activity in the polymerization reaction system. Therefore, the reaction time can be further shortened, and the reaction temperature can be further raised.

The amount of the compound (B-4) is preferably more than 0 mol, more preferably 0.5 mol or more, and particularly preferably 1 mol or more per 1 mol of the rare earth element constituting the component (A) from a viewpoint of acquiring sufficient catalytic activity, and is preferably 3 mol or less, more preferably 2.5 mol or less, and particularly preferably 2.2 mol or less per 1 mol of the rare earth element constituting the component (A) from a viewpoint of suppressing deterioration of catalytic activity.

### --First rare earth element compound-containing catalyst--

Examples of the first rare earth element compound-containing catalyst include a rare earth element compound-containing catalyst (hereinafter referred to as "the first rare earth element compound-containing catalyst" as well) containing at least one complex selected from the group consisting of a metallocene complex represented by the following general formula (I): 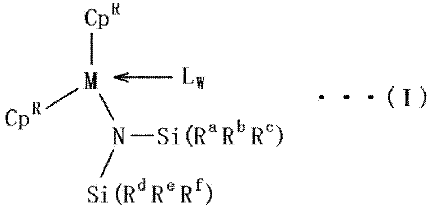 (where M represents a lanthanoid element, scandium or yttrium; Cp^{R}s each independently represent an unsubstituted or substituted indenyl; R^{a} to R^{f} each independently represent an alkyl group having a carbon number of 1 to 3 or hydrogen atom; L represents a neutral Lewis base; and w represents an integer in the range of 0 to 3); a metallocene complex represented by the following general formula (II): 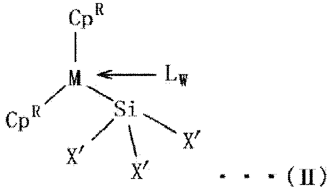 (where M represents a lanthanoid element, scandium or yttrium; Cp^{R}s each independently represent an unsubstituted or substituted indenyl; X' represents a hydrogen atom, a halogen atom, an alkoxide group, a thiolate group, an amide group, a silyl group, or a hydrocarbon group having a carbon number of 1 to 20; L represents a neutral Lewis base; and w represents an integer in the range of 0 to 3); and a half metallocene complex represented by the following general formula (III): 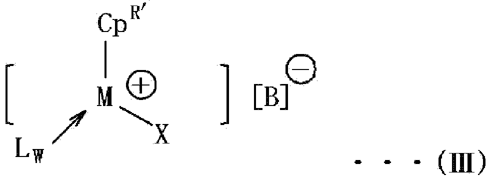 (where M represents a lanthanoid element, scandium or yttrium; Cp^{R}' represents an unsubstituted or substituted cyclopentadienyl, indenyl or fluorenyl; X represents a hydrogen atom, a halogen atom, an alkoxide group, a thiolate group, an amide group, a silyl group, or a hydrocarbon group having a carbon number of 1 to 20; L represents a neutral Lewis base; and w represents an integer in the range of 0 to 3); and [B]⁻ represents a non-coordinating anion). The rare earth element compound-containing catalyst may contain another component contained in a general rare earth element compound-containing catalyst containing a metallocene complex, such as a co-catalyst and the like. In this disclosure, a "metallocene complex" represents a complex compound in which at least one cyclopentadienyl or derivative thereof is bonded to a core metal. In this connection, a metallocene complex in which only a single cyclopentadienyl or derivative thereof is bonded to a core metal may occasionally be referred to as a "half metallocene complex" in particular.

In the metallocene complex represented by the general formulae (I) and (II) above, Cp^{R}s in the formulae each represent an unsubstituted or substituted indenyl group. Cp^{R} having an indenyl ring as the base skeleton may be represented as C₉H_{7-X}R_{X} or C₉H_{11-X}R_{X}, wherein X is an integer in the range of 0 to 7 or 0 to 11; and Rs preferably each independently represent a hydrocarbyl group or a metalloid group. The carbon number of the hydrocarbyl group is preferably in the range of 1 to 20, more preferably in the range of 1 to 10, and even more preferably in the range of 1 to 8. Specifically, preferable examples of the hydrocarbyl group include methyl group, ethyl group, phenyl group, benzyl group and the like. Examples of metalloid of the metalloid group include germyl Ge, stannyl Sn, and silyl Si. The metalloid group preferably includes a hydrocarbyl group which is defined in the same manner as the aforementioned hydrocarbyl group. Specific examples of the metalloid group include trimethylsilyl group and the like. Specific examples of the substituted indenyl include 2-phenylindenyl, 2-methylindenyl, and the like. Two Cp^{R}s in the general formulae (I) and (II) may be the same as or different from each other.

In the half metallocene cation complex represented by the general formula (III), Cp^{R}' in the formula represents a substituted or unsubstituted cyclopentadienyl, indenyl, or fluorenyl group, with the substituted or unsubstituted indenyl group being preferred. Cp^{R}' having a cyclopentadienyl ring as a basic skeleton is represented by C₅H_{5-X}R_{X}, wherein X represents an integer of 0 to 5; Rs preferably each independently represent a hydrocarbyl group or a metalloid group; and the carbon number of the hydrocarbyl group is preferably in the range of 1 to 20, more preferably in the range of 1 to 10, and even more preferably in the range of 1 to 8. Specifically, preferable examples of the hydrocarbyl group include methyl group, ethyl group, phenyl group, benzyl group and the like. Examples of metalloid of the metalloid group include germyl Ge, stannyl Sn, and silyl Si. The metalloid group preferably includes a hydrocarbyl group which is defined in the same manner as the aforementioned hydrocarbyl group. Specific examples of the metalloid group include trimethylsilyl and the like. Specific examples of Cp^{R}' having a cyclopentadienyl ring as the base skeleton include compounds represented by the following structural formula:

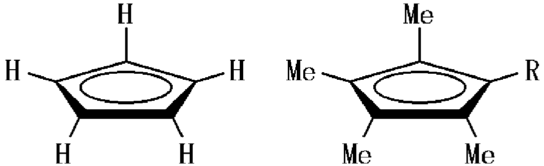

(In these structural formulae, R represents a hydrogen atom, methyl or ethyl group.)

In the general formula (III), Cp^{R}' having an indenyl ring as a basic skeleton is defined as the same as Cp^{R}s in the general formula (I), and preferred examples thereof are also the same as those of Cp^{R}s in the general formula (I).

In the general formula (III), Cp^{R}' having the fluorenyl ring above as a basic skeleton may be represented by C₁₃H_{9-X}R_{X} or C₁₃H_{17-X}R_{X}, wherein X is an integer in the range of 0 to 9 or 0 to 17; Rs preferably each independently represent a hydrocarbyl group or a metalloid group; and the carbon number of the hydrocarbyl group is preferably in the range of 1 to 20, more preferably in the range of 1 to 10, and even more preferably in the range of 1 to 8. Specifically, preferable examples of the hydrocarbyl group include methyl group, ethyl group, phenyl group, benzyl group and the like. Examples of metalloid of the metalloid group include germyl Ge, stannyl Sn, and silyl Si. The metalloid group preferably includes a hydrocarbyl group which is defined in the same manner as the aforementioned hydrocarbyl group. Specific examples of the metalloid group include trimethylsilyl and the like.

The central metal represented by M in the general formulae (I), (II), and (III) represents a lanthanoid element, scandium, or yttrium. The lanthanoid elements include elements having atomic numbers 57 to 71 in the periodic table and any of these elements is acceptable. Preferable examples of the core metal M include samarium Sm, neodymium Nd, praseodymium Pr, gadolinium Gd, cerium Ce, holmium Ho, scandium Sc, and yttrium Y.

The metallocene complex represented by the general formula (I) includes a silylamide ligand [-N(SiR₃)₂]. R groups included in the silylamide ligand (i.e. R^{a} to R^{f} in the general formula (I)) each independently represent an alkyl group having a carbon number of 1 to 3 or a hydrogen atom. It is preferable that at least one of R^{a} to R^{f} is a hydrogen atom. With at least one of R^{a} to R^{f} being a hydrogen atom, the catalyst can be synthesized with ease, and the bulkiness around silicon can be reduced, thereby allowing the unconjugated olefin to be easily introduced. For similar reasons, it is more preferable that at least one of R^{a} to R^{c} is a hydrogen atom and at least one of R^{d} to R^{f} is a hydrogen atom. A methyl group is preferred as the alkyl group.

The metallocene complex represented by the general formula (II) includes a silyl ligand represented by [-SiX'₃]. X' in the silyl ligand represented by [-SiX'₃] is a group defined as the same as X in the general formula (III) described below, and preferred examples thereof are also the same as those of X in the general formula (III).

In the general formula (III), X represents a group selected from a group consisting of a hydrogen atom, a halogen atom, an alkoxide group, a thiolate group, an amide group, a silyl group, and a hydrocarbon group having a carbon number of 1 to 20. Examples of the alkoxide group include: aliphatic alkoxy groups such as methoxy group, ethoxy group, propoxy group, n-butoxy group, isobutoxy group, sec-butoxy group, tert-butoxy, and the like; and aryloxide groups such as phenoxy group, 2,6-di-tert-butylphenoxy group, 2,6-diisopropylphenoxy group, 2,6-dineopentylphenoxy group, 2-tert-butyl-6-isopropylphenoxy group, 2-tert-butyl-6-neopentylphenoxy group, 2-isopropyl-6-neopentylphenoxy group, and the like, with 2,6-di-tert-butylphenoxy group being preferred.

In the general formula (III), examples of the thiolate group represented by X include: aliphatic thiolate groups such as thiomethoxy group, thioethoxy group, thiopropoxy group, thio-n-butoxy group, thioisobutoxy group, thio-sec-butoxy group, and thio-tert-butoxy group; and aryl thiolate groups such as thiophenoxy group, 2,6-di-tert-butylthiophenoxy group, 2,6-diisopropylthiophenoxy group, 2,6-dineopentylthiophenoxy group, 2-tert-butyl-6-isopropylthiophenoxy group, 2-tert-butyl-6-thioneopentylphenoxy group, 2-isopropyl-6-thioneopentylphenoxy group, and 2,4,6-triisopropylthiophenoxy group, with 2,4,6-triisopropylthiophenoxy group being preferred.

In the general formula (III), the amide group represented by X may be any one of: aliphatic amide groups such as dimethyl amide group, diethyl amide group, and diisopropyl amide group; arylamide groups such as phenyl amide group, 2,6-di-tert-butylphenyl amide group, 2,6-diisopropylphenyl amide group, 2,6-dineopentylphenyl amide group, 2-tert-butyl-6-isopropylphenyl amide group, 2-tert-butyl-6-neopentylphenyl amide group, 2-isopropyl-6-neopentylphenyl amide group, and 2,4,6-tri-tert-butylphenyl amide group; and bistrialkylsilyl amide groups such as bistrimethylsilyl amide group, with bistrimethylsilyl amide group being preferred.

In the general formula (III), examples of the silyl group represented by X include trimethylsilyl group, tris(trimethylsilyl)silyl group, bis(trimethylsilyl)methylsilyl group, trimethylsilyl(dimethyl)silyl group, and triisopropylsilyl(bistrimethylsilyl)silyl group, with tris(trimethylsilyl)silyl group being preferred.

In the general formula (III), the halogen atom represented by X may be any one of a fluorine atom, a chlorine atom, a bromine atom, and an iodine atom, with the chlorine atom and the iodine atom being preferred. Specific examples of the hydrocarbon group having a carbon number of 1 to 20 represented by X include: linear or branched aliphatic hydrocarbon groups such as methyl group, ethyl group, n-propyl group, isopropyl group, n-butyl group, isobutyl group, sec-butyl group, tert-butyl group, neopentyl group, hexyl group, and octyl group; aromatic hydrocarbon groups such as phenyl group, tolyl group, and naphthyl group; aralkyl groups such as benzyl group; hydrocarbon groups containing silicon atom such as trimethylsilylmethyl group and bistrimethylsilylmethyl group; and the like, with methyl group, ethyl group, isopropyl group, trimethylsilylmethyl group, and the like being preferred.

In the general formula (III), the bistrimethylsilyl amide group or the hydrocarbon group having a carbon number of 1 to 20 is preferred as X.

In the general formula (III), examples of the non-coordinating anion represented by [B]⁻ include a quadrivalent boron anion. Specific examples of the quadrivalent boron anion include tetraphenyl borate, tetrakis(monofluorophenyl)borate, tetrakis(difluorophenyl)borate, tetrakis(trifluorophenyl)borate, tetrakis(tetrafluorophenyl)borate, tetrakis(pentafluorophenyl)borate, tetrakis(tetrafluoromethylphenyl)borate, tetra(tolyl)borate, tetra(xylyl)borate, (triphenyl, pentafluorophenyl)borate, [tris(pentafluorophenyl), phenyl]borate, tridecahydride-7,8-dicarbaundecaborate, and the like, with tetrakis(pentafluorophenyl)borate being preferred.

The metallocene complexes represented by the general formulae (I) and (II) and the half metallocene cation complex represented by the general formula (III) may include 0 to 3, preferably 0 or 1 neutral Lewis bases represented by L. Examples of the neutral Lewis base L include tetrahydrofuran, diethyl ether, dimethylaniline, trimethylphosphine, lithium chloride, neutral olefins, neutral diolefins, and the like. The neutral Lewis bases L may be of either the same type or different types when the complex includes a plurality of neutral Lewis bases L.

The metallocene complexes represented by the general formulae (I) and (II), and the half metallocene cation complex represented by the general formula (III) may be each present as a monomer or as a dimer or a multimer having more monomers.

The co-catalyst that may be used in the first rare earth element compound-containing catalyst may be arbitrarily selected from components used as a co-catalyst of a general rare earth element compound-containing catalyst containing a metallocene complex. Preferable examples of the co-catalyst include aluminoxane, an organic aluminum compound, the ionic compounds described above, and the like. These co-catalysts may be used alone or in a combination of two or more.

Alkylaluminoxane is preferable as the aluminoxane and examples thereof include methylaluminoxane (MAO), modified methylaluminoxane, and the like. "MMAO-3A", manufactured by Tosoh Finechem Corporation, or the like is preferable as the modified methylaluminoxane. Provided that "Al/M" represents an element ratio of the aluminum element Al of the aluminoxane with respect to the central metal M of the metallocene complex, the content of the aluminoxane in the first rare earth element compound-containing catalyst is set such that the element ratio Al/M is approximately 10 to 1000, preferably approximately 100.

On the other hand, a preferred example of the organic aluminum compound may include an organic aluminum compound represented by the general formula AlRR'R" (where R and R' each independently represent a hydrocarbon group of C1 to C10 or a hydrogen atom, and R" is a hydrocarbon group of C1 to C10). Examples of the organic aluminum compound include trialkylaluminum, dialkylaluminum chloride, alkylaluminum dichloride, dialkylaluminum hydride, and the like, with trialkylaluminum being preferred. Examples of trialkylaluminum include triethylaluminum, triisobutylaluminum, and the like. A content of the organic aluminum compound in the rare earth element compound-containing catalyst is preferably 1 time to 50 times in mol and more preferably approximately 10 times in mol, with respect to the metallocene complex.

In the rare earth element compound-containing catalyst, the metallocene complex represented by the general formulae (I) and (II) and the half metallocene cation complex represented by the general formula (III) may be combined with an appropriate co-catalyst, to thereby increase the cis-1,4 bond content and the molecular weight of a copolymer to be obtained in the case where a diene-derived unit is contained in the polymer.

### --Second rare earth element compound-containing catalyst--

The second rare earth element compound-containing catalyst contains a metallocene-based composite catalyst.

The aforementioned metallocene-based composite catalyst has a rare earth element of lanthanoid element, scandium or yttrium, and a group 13 element in the periodic table, and is represented by the following formula (A):

RₐMX_{b}QY_{b} ... (A)

[where Rs each independently represent an unsubstituted or substituted cyclopentadienyl, or an unsubstituted or substituted indenyl; M is coordinated with Rs; M represents a lanthanoid element, scandium or yttrium; Xs each independently represent a hydrocarbon group having a carbon number of 1 to 20; M and Q are µ-coordinated with X; Q represents a group 13 element in the periodic table; Ys each independently represent a hydrocarbon group having a carbon number of 1 to 20 or a hydrogen atom; Q is coordinated with Y; and a = b = 2].

In the metallocene-based composite catalyst, the metal M in the formula (A) is defined in the same manner as the central metal M in the general formulae (I) to (III).

In the formula (A), Rs each independently represent an unsubstituted or substituted cyclopentadienyl, or an unsubstituted or substituted indenyl, and M is coordinated with Rs. Specific examples of the substituted cyclopentadienyl group include tetramethylcyclopentadienyl group and pentamethylcyclopentadienyl group. Specific examples of the substituted indenyl group include 1,2,3-trimethyl indenyl group, heptamethyl indenyl group, and 1,2,4,5,6,7-hexamethyl indenyl group.

In the formula (A), Q represents a group 13 element in the periodic table and may be, in particular, boron, aluminum, gallium, indium, thallium and the like.

In the formula (A), Xs each independently represent a hydrocarbon group having a carbon number of 1 to 20 and M and Q are µ-coordinated with X. Examples of the hydrocarbon group having a carbon number of 1 to 20 include methyl group, ethyl group, propyl group, butyl group, pentyl group, hexyl group, heptyl group, octyl group, decyl group, dodecyl group, tridecyl group, tetradecyl group, pentadecyl group, hexadecyl group, heptadecyl group, stearyl group, and the like. The expression that "M and Q are µ-coordinated with X" represents that M and Q are coordinated with X in a crosslinking manner.

In the formula (A), Ys each independently represent a hydrocarbon group having a carbon number of 1 to 20 or a hydrogen atom, and Y is coordinated with Q. The hydrocarbon group having a carbon number of 1 to 20 is defined in the same manner as X in the formula (A).

The rare earth element compound-containing catalyst may contain the metallocene-based composite catalyst and a boron anion, and preferably further contains another component contained in a general rare earth element compound-containing catalyst containing a metallocene complex, such as a co-catalyst and the like. A catalyst composed of the metallocene-based composite catalyst and the boron anion is occasionally referred to as a "two-component catalyst". As is the case with the metallocene-based composite catalyst, the second rare earth element compound-containing catalyst further contains boron anions, which allows arbitrary control of the content of each monomer component in the copolymer.

Specific examples of the boron anion constituting a two-component catalyst as the second rare earth element compound-containing catalyst include a quadrivalent boron anion. Examples thereof may include: tetraphenyl borate, tetrakis(monofluorophenyl)borate, tetrakis(difluorophenyl)borate, tetrakis(trifluorophenyl)borate, tetrakis(tetrafluorophenyl)borate, tetrakis(pentafluorophenyl)borate, tetrakis(tetrafluoromethylphenyl)borate, tetra(tolyl)borate, tetra(xylyl)borate, (triphenyl, pentafluorophenyl)borate, [tris(pentafluorophenyl), phenyl]borate, and tridecahydride-7,8-dicarbaundecaborate, with tetrakis(pentafluorophenyl)borate being preferred.

The boron anion can be used as an ionic compound in which the boron anion is combined with a cation. Examples of the cation include carbonium cation, oxonium cation, amine cation, phosphonium cation, cycloheptatrienyl cation, ferroceium cation having transition metal, and the like. Specific examples of carbonium cation include trisubstituted carbonium cations such as triphenylcarbonium cation, tri(substituted phenyl)carbonium cation, and the like. Specific examples of the tri(substituted phenyl)carbonium cation include tri(methylphenyl)carbonium cation, and the like. Specific examples of the amine cation include: trialkylammonium cations such as trimethylammonium cation, triethylammonium cation, tripropylammonium cation, tributylammonium cation; N,N-dialkylanilinium cations such as N,N-dimethylanilinium cation, N,N-diethylanilinium cation, N,N-2,4,6-pentamethylanilinium cation, and the like; and dialkylammonium cations such as diisopropylammonium cation, dicyclohexylammonium cation, and the like. Specific examples of phosphonium cation include triarylphosphonium cations such as triphenylphosphonium cation, tri(methylphenyl)phosphonium cation, tri(dimethylphenyl)phosphonium cation, and the like. N,N-dialkylanilinium cation and carbonium cation are preferable and N,N-dialkylanilinium cation is particularly preferable as the cation among these examples. Accordingly, N,N-dimethylanilinium tetrakis(pentafluorophenyl)borate, triphenylcarbonium tetrakis(pentafluorophenyl)borate, and the like are preferable as the ionic compound. The content of the ionic compound composed of a boron anion and a cation may preferably be added by 0.1 times to 10 times in mol, and more preferably by approximately 1 time in mol, with respect to the metallocene-based composite catalyst.

Preferred examples of the co-catalyst that can be used to the second rare earth element compound-containing catalyst include aluminoxane. Alkylaluminoxane is preferable as the aluminoxane and examples thereof include methylaluminoxane (MAO), modified methylaluminoxane, and the like. "MMAO-3A", manufactured by Tosoh Finechem Corporation, or the like is preferable as the modified methylaluminoxane. The aluminoxanes may be used alone or in a combination of two or more.

### <<Second reaction>>

The second reaction reacts a first reactant obtained in the first reaction with oxygen.

In the second reaction, for example, in the case where 1,3-butadiene is used as a raw material monomer, a reaction represented by the following chemical reaction formula (2) occurs.

Al[-(CH₂-CH=CH-CH₂)ₙ-R]₃ + 1.5O₂ → Al[O-(CH₂-CH=CH-CH₂)ₙ-R]₃ ... (2)

Note that in the chemical reaction formula (2), the first reactant is Al[-(CH₂-CH=CH-CH₂)ₙ-R]₃, R represents a hydrocarbon group or a hydrogen atom, and n represents any natural number.

The reaction temperature in the second reaction is not specifically limited and may be appropriately selected depending on the purpose, but is preferably room temperature (20°C) to 120°C, more preferably 30°C to 100°C, and particularly preferably 40°C to 80°C. A reaction temperature of lower than room temperature (20°C) may raise the cost of temperature adjustment, and a reaction temperature of higher than 120°C may cause difficulty in temperature adjustment. On the other hand, a reaction temperature in the particularly preferable range is beneficial from a viewpoint of production cost.

The reaction pressure in the second reaction is not specifically limited and may be appropriately selected depending on the purpose, but is preferably 0.1 kgf/cm² to 100 kgf/cm², more preferably 1 kgf/cm² to 50 kgf/cm², and particularly preferably 2 kgf/cm² to 10 kgf/cm². A reaction pressure of lower than 0.1 kgf/cm² may be incapable of allowing the reaction to proceed sufficiently, and a reaction pressure of higher than 100 kgf/cm² may be unpreferable from an industrial viewpoint. On the other hand, a reaction pressure in the particularly preferable range is beneficial from a viewpoint of production equipment.

The reaction time in the second reaction is not specifically limited and may be appropriately selected depending on the purpose, but is preferably 1 second to 24 hours, more preferably 10 minutes to 10 hours, and particularly preferably 30 minutes to 3 hours. A reaction time of less than 1 second may be incapable of allowing the reaction to proceed sufficiently, and a reaction time of more than 24 hours may be unpreferable from an industrial viewpoint. On the other hand, a reaction time in the particularly preferable range is beneficial from a viewpoint of production efficiency.

A solvent used in the second reaction is not specifically limited and may be appropriately selected depending on the purpose. Examples include toluene, n-hexane, and cyclohexane. These may be used alone or in a combination of two or more. Among these, toluene is preferable from a viewpoint of solubility of the polymer.

The amount of the oxygen is not specifically limited and may be appropriately selected depending on the purpose, but is preferably 1 time to 10,000 times in mol, more preferably 5 times to 1,000 times in mol, and particularly preferably 10 times to 500 times in mol with respect to the first reactant. An amount of less than 1 time in mol may be incapable of allowing the reaction to proceed sufficiently. On the other hand, an amount in the particularly preferable range is beneficial from a viewpoint of production cost.

### «Third reaction»

The third reaction reacts a second reactant obtained in the second reaction with at least any one of water or an alcohol.

In the third reaction, for example, in the case where 1,3-butadiene is used as a raw material monomer and water is used, a reaction represented by the following chemical reaction formula (3) occurs.

Al[O-(CH₂-CH=CH-CH₂)ₙ-R]₃ + 3H₂O → 3R(CH₂-CH=CH-CH₂)ₙOH + Al(OH)₃ ... (3)

Note that in the chemical reaction formula (3), the second reactant is Al[O-(CH₂-CH=CH-CH₂)ₙ-R]₃, R represents a hydrocarbon group or a hydrogen atom, and n represents any natural number.

The reaction temperature in the third reaction is not specifically limited and may be appropriately selected depending on the purpose, but is preferably 0°C to 100°C, more preferably 10°C to 80°C, and particularly preferably room temperature (20°C) to 50°C. A reaction temperature of lower than 0°C may raise the cost of temperature adjustment, and a reaction temperature of higher than 100°C may require complicated production equipment. On the other hand, a reaction temperature in the particularly preferable range is beneficial from a viewpoint of production equipment.

The reaction pressure in the third reaction is not specifically limited and may be appropriately selected depending on the purpose, but is preferably 0.1 kgf/cm² to 100 kgf/cm², more preferably 0.5 kgf/cm² to 50 kgf/cm², and particularly preferably 1 kgf/cm² to 10 kgf/cm². A reaction pressure of lower than 0.1 kgf/cm² may be incapable of allowing the reaction to proceed sufficiently, and a reaction pressure of higher than 100 kgf/cm² may be unpreferable from an industrial viewpoint. On the other hand, a reaction pressure in the particularly preferable range is beneficial from a viewpoint of production equipment.

The reaction time in the third reaction is not specifically limited and may be appropriately selected depending on the purpose, but is preferably 1 second to 24 hours, more preferably 10 minutes to 5 hours, and particularly preferably 15 minutes to 1 hour. A reaction time of less than 1 second may be incapable of allowing to the reaction to proceed sufficiently, and a reaction time of more than 24 hours may be unpreferable from an industrial viewpoint. On the other hand, a reaction time in the particularly preferable range is beneficial from a viewpoint of production cost.

A solvent used in the third reaction is not specifically limited and may be appropriately selected depending on the purpose. Examples include tetrahydrofuran (THF), acetone, and methyl ethyl ketone. These may be used alone or in a combination of two or more. Among these, tetrahydrofuran (THF) is preferable from a viewpoint of solubility.

The amount of the water and/or the alcohol is not specifically limited and may be appropriately selected depending on the purpose, but is preferably 1 time to 10,000 times in mol, more preferably 5 times to 1,000 times in mol, and particularly preferably 10 times to 500 times in mol with respect to the second reactant. An amount of less than 1 time in mol may be incapable of allowing the reaction to proceed sufficiently. On the other hand, an amount in the particularly preferable range is beneficial from a viewpoint of production cost.

The alcohol is not particularly limited and may be selected as appropriate depending on the purpose. Examples include methanol, ethanol, and isopropanol. These may be used alone or in a combination of two or more. Among these, isopropanol is preferable from a viewpoint of safety.

### <<Other processes>>

The other processes are not specifically limited and may be appropriately selected depending on the purpose. Examples include recovery that recovers a target product from the reactant. The recovery is not specifically limited and may be appropriately selected depending on the purpose. Examples include filtration, purification through column, and reprecipitation.

A modified conjugated diene-based polymer having a hydroxyl group at a terminal that is produced through the aforementioned first reaction, second reaction and third reaction uses oxygen as a modifier, and thus has an economic benefit that the cost required for modification is reduced.

The rubber composition of this disclosure contains as a rubber component the aforementioned modified conjugated diene-based polymer having a hydroxyl group at a terminal and at least one of a natural rubber (NR) or a polyisoprene rubber (IR), and may further contain other rubber components as well. Examples of such other rubber components include synthetic diene based rubbers such as a polybutadiene rubber (BR), a styrene-butadiene copolymer rubber (SBR), and a styrene-isoprene copolymer rubber (SIR) without a hydroxyl group at a terminal.

The content of the modified conjugated diene-based polymer having a hydroxyl group at a terminal in the rubber component is preferably 20 mass% or more, more preferably 30 mass% or more, and even more preferably 40 mass% or more; and is preferably 80 mass% or less, more preferably 70 mass% or less, and even more preferably 60 mass% or less.

Moreover, the total content of the natural rubber and the polyisoprene rubber in the rubber component is preferably 20 mass% or more, more preferably 30 mass% or more, and even more preferably 40 mass% or more; and is preferably 80 mass% or less, more preferably 70 mass% or less, and even more preferably 60 mass% or less.

A content of 20 mass% or more of the modified conjugated diene-based polymer in the rubber component enhances improvement effect of low loss property and wear resistance that is obtained by blending the modified conjugated diene-based polymer and the natural rubber and/or the polyisoprene rubber.

Moreover, a content of 80 mass% or less of the modified conjugated diene-based polymer in the rubber component and a total content of 20 mass% or more of the natural rubber and the polyisoprene rubber also enhance improvement effect of low loss property and wear resistance that is obtained by blending the modified conjugated diene-based polymer and the natural rubber and/or the polyisoprene rubber.

In the rubber composition of this disclosure, it is preferable that the modified conjugated diene-based polymer is a modified butadiene polymer (a modified butadiene polymer having a hydroxyl group at a terminal). By blending the modified butadiene polymer and the natural rubber and/or the polyisoprene rubber, low loss property of the rubber composition can be further improved.

It is preferable that the rubber composition of this disclosure further contains carbon black and silica. By containing carbon black in the rubber composition, wear resistance of the rubber composition is further improved, and by containing silica in the rubber composition, low loss property of the rubber composition is further improved.

The content of the carbon black is preferably in the range of 10 to 100 parts by mass, and more preferably in the range of 20 to 60 parts by mass per 100 parts by mass of the rubber component. A content of the carbon black in any of the ranges set forth above further improves wear resistance of the rubber composition while maintaining excellent operability of the rubber composition.

The content of the silica is preferably in the range of 10 to 50 parts by mass, and more preferably in the range of 15 to 30 parts by mass per 100 parts by mass of the rubber component. A content of the silica in any of the ranges set forth above further improves low loss property of the rubber composition while maintaining excellent operability of the rubber composition.

Here, it is preferable that the content of the carbon black is larger than the content of the silica. A content of the carbon black larger than the content of the silica further improves wear resistance of the rubber composition.

Further, it is preferable that the content of the carbon black is larger than 2 times of the content of the silica. A content of the carbon black larger than 2 times of the content of the silica further improves wear resistance of the rubber composition.

The rubber composition of this disclosure may contain a filler other than the aforementioned carbon black and silica as a filler. Examples of such other filler include aluminum hydroxide, clay, alumina, talc, mica, kaolin, calcium carbonate, magnesium carbonate, magnesium hydroxide, magnesium oxide, titanium oxide, potassium titanate, and barium sulfate.

Other than the rubber component containing the modified conjugated diene-based polymer and the natural rubber and/or the polyisoprene rubber, and the filler, an antioxidant, a softener, a silane coupling agent, stearic acid, zinc oxide, a vulcanization accelerator, a vulcanizing agent, etc. may be appropriate selected and compounded to the rubber composition of this disclosure as long as not inhibiting the purpose of this disclosure. Commercially available products may be suitably used as these additives.

The rubber composition can be produced by mixing the rubber component containing at least the modified conjugated diene-based polymer and the natural rubber and/or the polyisoprene rubber with various compounding agents selected as appropriate when necessary, and kneading, warming, extruding, etc. the mixture.

### <Crosslinked rubber composition>

The crosslinked rubber composition of this disclosure is a crosslinking product of the aforementioned rubber composition.

Such crosslinked rubber composition of this disclosure is obtained by crosslinking the aforementioned rubber composition, and thus has excellent low loss property and wear resistance.

In the crosslinked rubber composition of this disclosure, conditions of the crosslinking are not specifically limited and may be appropriately selected depending on the purpose, but it is preferable that the crosslinking temperature (the vulcanization temperature in the case of sulfur crosslinking) is 120°C to 200°C, and the crosslinking time is 1 minute to 900 minutes.

### <Rubber product>

The rubber product of this disclosure uses the aforementioned rubber composition or crosslinked rubber composition.

Such rubber product of this disclosure uses the aforementioned rubber composition or crosslinked rubber composition obtained by crosslinking the rubber composition, which has excellent low loss property and wear resistance, and thus has low energy loss and low heat generating property, and in addition, high wear resistance and long product durability.

It is preferable that the rubber product of this disclosure is a tire. As described above, the rubber product of this disclosure has low energy loss and long product durability, and thus is particularly suitable as a tire. Such tire of this disclosure has low rolling resistance, high fuel efficiency, and excellent wear resistance.

The rubber composition of the present disclosure or the crosslinked rubber composition of the present disclosure may be applied, for example, to a tread, a sidewall, a side reinforcing rubber, and a bead filler of a tire, without being limited thereto.

As a method of manufacturing the tire, conventional methods may be employed. For example, members used for production of usual tires such as a carcass layer, a belt layer, a tread layer, which are composed of unvulcanized rubber, are successively laminated on a tire molding drum, then the drum is withdrawn to obtain a green tire. Thereafter, the green tire is heated and vulcanized in accordance with an ordinary method, to thereby obtain a desired tire.

Alternatively, a tread is removed from a used tire so as to prepare a base tire, and on the other hand, a vulcanized tread composed of the crosslinked rubber composition is prepared, vulcanized, and adhered to the base tire, so as to constitute a tire.

The rubber product of this disclosure may be one other than tire, such as an anti-vibration rubber, a seismic isolation rubber, a belt (conveyor belt), a rubber crawler, various hoses, and the like.

### EXAMPLES

In the following, the present disclosure is described in detail with reference to Examples. However, the present disclosure is no way limited to Examples in below.

### (Polymerization Example 1)

Within a globe box under a nitrogen atmosphere, in a glass container, 6.4 µmol of bis(2-phenylindenyl)gadolinium bis(dimethylsilylamide) [(2-PhC₉H₆)₂GdN(SiHMe₂)₂], 0.9 mmol of diisobutyl aluminum hydride, and 6.4 µmol of triphenylcarbonium tetrakis(pentafluorophenyl)borate [Ph₃CB(C₆F₅)₄] were dissolved in 10 mL of toluene, so as to obtain a polymerization catalyst composition.

On the other hand, 520 g of a toluene solution containing 80.0 g of butadiene was added to a sufficiently dried 1L pressure-resistant glass reactor, so as to obtain a monomer solution.

Then, the polymerization catalyst composition was taken out from the glovebox, and was added to the monomer solution. After maintaining this reaction system at 50°C for 60 minutes so as to perform polymerization reaction, oxygen was introduced into the polymerization reactor for 15 minutes, and the reaction system was left standing for 45 minutes.

Then, 5 mL of H₂O and 5 mL of an isopropanol solution (5 mass%) of 2,2'-methylene-bis(6-t-butyl-4-ethylphenol) (product name: NOCRAC NS-5, manufactured by Ouchi Shinko Chemical Industrial Co., Ltd.) were added to the reaction system, so as to terminate the polymerization reaction.

Subsequently, by adding a large amount of methanol into the reactor, the reaction product was precipitated and separated, and further vacuum-dried at 60°C, to obtain a polymer A having a hydroxyl group at a terminal (yield: 80.0 g).

### (Polymerization Example 2)

Within a globe box under a nitrogen atmosphere, in a glass container, 21.0 µmol of trisbistrimethylsilylamide gadolinium {Gd[N(SiMe₃)₂]₃}, 42.0 µmol of 1-benzylindene, 0.7 mmol of diisobutyl aluminum hydride, 1.75 mmol of triisobutyl aluminum, and MMAO (product name: MMAO-3A, manufactured by Tosoh Finechem Corporation) were added such that a molar ratio (Al/Gd) of aluminum (Al) in MMAO to gadolinium (Gd) is 20, and then 42.0 µmol of diethyl aluminum chloride was further added and dissolved in 20 mL of cyclohexane, so as to obtain a polymerization catalyst composition.

On the other hand, 450 g of a toluene solution containing 70.0 g of butadiene was added to a sufficiently dried 1L pressure-resistant glass reactor, so as to obtain a monomer solution.

Then, the polymerization catalyst composition was taken out from the glovebox, and was added to the monomer solution. After maintaining this reaction system at 50°C for 60 minutes so as to perform polymerization reaction, oxygen was introduced into the polymerization reactor for 15 minutes, and the reaction system was left standing for 45 minutes.

Then, 5 mL of H₂O and 5 mL of an isopropanol solution (5 mass%) of 2,2'-methylene-bis(6-t-butyl-4-ethylphenol) (product name: NOCRAC NS-5, manufactured by Ouchi Shinko Chemical Industrial Co., Ltd.) were added to the reaction system, so as to terminate the polymerization reaction.

Subsequently, by adding a large amount of methanol into the reactor, the reaction product was precipitated and separated, and further vacuum-dried at 60°C, to obtain a polymer B having a hydroxyl group at a terminal (yield: 70.0 g).

### (Comparative Polymerization Example 1)

Polymerization was performed similarly as Polymerization Example 1 except that oxygen introduction was not performed. A polymer C without a hydroxyl group at a terminal was obtained (yield: 80.0 g).

### <Evaluation of polymer>

The polymers A to C manufactured as mentioned above were measured of: (1) the weight-average molecular weight (Mw), the molecular weight distribution (Mw/Mn), and (2) the cis-1,4 bond content, according to the following methods, and (3) the cold flow resistance thereof was evaluated according to the following method. The results were as indicated in Table 1.

### (1) Weight-average molecular weight (Mw) and molecular weight distribution (Mw/Mn)>

The polystyrene equivalent weight-average molecular weight (Mw) and the molecular weight distribution (Mw/Mn) of each of the polymers were obtained through gel permeation chromatography [GPC: HLC-8121GPC/HT (manufactured by Tosoh Corporation), column: two of GMH_{HR}-H(S)HT (manufactured by Tosoh Corporation), detector: a differential refractometer (RI), GPC measurement temperature: 40°C], using monodisperse polystyrene as a reference.

### (2) Cis-1,4 bond content

The microstructure of the butadiene unit in the polymer was determined from an integral ratio based on ¹H-NMR spectrum (1,2-vinyl bond content) and ¹³C-NMR spectrum (a ratio of cis-1,4 bond content to trans-1,4 bond content). The calculated values of the cis-1,4 bond content (%) were as indicated in Table 1.

### (3) Cold flow resistance

The cold flow (C/F) was measured by pushing out the polymer through a 1/4-inch orifice at pressure: 3.5 lb/in² and temperature: 50°C. After being left stand for 10 minutes so as to come into a steady state, the pushing-out rate thereof was measured, indicated with a number of miligram (mg/min), and indexed with the reciprocal of the value of the polymer C as 100. A larger index value indicates better cold flow resistance and better storage stability.

**[Table 1]**

| | Polymer A | Polymer B | Polymer C |
|---|---|---|---|
| Weight-average molecular weight (Mw) | 480×10³ | 450×10³ | 480×10³ |
| Molecular weight distribution (Mw/Mn) | 1.6 | 2.1 | 1.6 |
| Cis-1,4 bond content (%) | 97.8 | 98.5 | 97.8 |
| Cold flow resistance (index) | 116 | 121 | 100 |

### <Evaluation method of rubber composition>

By using the aforementioned polymers A to C, vulcanized rubber compositions (crosslinked rubber compositions) obtained by preparing rubber compositions having each formulation as indicated in Table 2 to Table 5 and performing vulcanization were subjected to evaluation of (1) low loss property and (2) wear resistance according to the following methods. The results were as indicated in Table 2 to Table 5.

### (1) Low loss property

The obtained rubber composition was vulcanized at 160°C for 20 minutes, and measured of tan *δ* by using a viscoelasticity meter (manufactured by Rheometrics Inc.) at temperature: 60°C, dynamic strain: 5%, and frequency: 15 Hz. Each tan *δ* was indexed with
tan *δ* of Comparative Example 1 as 100 in Table 2,
tan *δ* of Comparative Example 4 as 100 in Table 3,
tan *δ* of Comparative Example 5 as 100 in Table 4, and
tan *δ* of Comparative Example 6 as 100 in Table 5.

A smaller index value indicates smaller tan *δ* and better low loss property.

### (2) Wear resistance

The obtained rubber composition was vulcanized at 160°C for 20 minutes, and then measured of the abrasion amount at 23°C by using a Lambourn abrasion tester according to JIS K 6264-2:2005. Each abrasion amount was indexed, with
the reciprocal of the abrasion amount of Comparative Example 1 as 100 in Table 2,
the reciprocal of the abrasion amount of Comparative Example 4 as 100 in Table 3,
the reciprocal of the abrasion amount of Comparative Example 5 as 100 in Table 4, and
the reciprocal of the abrasion amount of Comparative Example 6 as 100 in Table 5.

A larger index value indicates a smaller abrasion amount and better wear resistance.

**[Table 2]**

| | | | Comparative Example 1 | Comparative Example 2 | Comparative Example 3 |
|---|---|---|---|---|---|
| Formulation | Natural rubber (NR) | Parts by mass | 0 | 0 | 0 |
| | Polymer A | | 0 | 100 | 0 |
| | Polymer B | | 0 | 0 | 100 |
| | Polymer C | | 100 | 0 | 0 |
| | Carbon black *1 | | 25 | 25 | 25 |
| | Silica *2 | | 25 | 25 | 25 |
| | Stearic acid | | 2 | 2 | 2 |
| | Wax *3 | | 1 | 1 | 1 |
| | Antioxidant *4 | | 1 | 1 | 1 |
| | Zinc oxide | | 3 | 3 | 3 |
| | Vulcanization accelerator *5 | | 1 | 1 | 1 |
| | Sulfur | | 1.2 | 1.2 | 1.2 |
| | Silane coupling agent *6 | | 2 | 2 | 2 |
| Evaluation | Low loss property | Index | 100 | 95 | 97 |
| | Wear resistance | | 100 | 101 | 100 |

**[Table 3]**

| | | | Comparative Example 4 | Example 1 | Example 2 |
|---|---|---|---|---|---|
| Formulation | Natural rubber (NR) | Parts by mass | 80 | 80 | 80 |
| | Polymer A | | 0 | 20 | 0 |
| | Polymer B | | 0 | 0 | 20 |
| | Polymer C | | 20 | 0 | 0 |
| | Carbon black *1 | | 40 | 40 | 40 |
| | Silica *2 | | 20 | 20 | 20 |
| | Stearic acid | | 2 | 2 | 2 |
| | Wax *3 | | 1 | 1 | 1 |
| | Antioxidant *4 | | 1 | 1 | 1 |
| | Zinc oxide | | 3 | 3 | 3 |
| | Vulcanization accelerator *5 | | 1 | 1 | 1 |
| | Sulfur | | 1.2 | 1.2 | 1.2 |
| | Silane coupling agent *6 | | 2 | 2 | 2 |
| Evaluation | Low loss property | Index | 100 | 92 | 95 |
| | Wear resistance | | 100 | 120 | 118 |

**[Table 4]**

| | | | Comparative Example 5 | Example 3 | Example 4 | Example 5 | Example 6 |
|---|---|---|---|---|---|---|---|
| Formulation | Natural rubber (NR) | Parts by mass | 60 | 60 | 60 | 40 | 40 |
| | Polymer A | | 0 | 40 | 0 | 60 | 0 |
| | Polymer B | | 0 | 0 | 40 | 0 | 60 |
| | Polymer C | | 40 | 0 | 0 | 0 | 0 |
| | Carbon black *1 | | 40 | 40 | 40 | 40 | 40 |
| | Silica *2 | | 20 | 20 | 20 | 20 | 20 |
| | Stearic acid | | 2 | 2 | 2 | 2 | 2 |
| | Wax *3 | | 1 | 1 | 1 | 1 | 1 |
| | Antioxidant *4 | | 1 | 1 | 1 | 1 | 1 |
| | Zinc oxide | | 3 | 3 | 3 | 3 | 3 |
| | Vulcanization accelerator *5 | | 1 | 1 | 1 | 1 | 1 |
| | Sulfur | | 1.2 | 1.2 | 1.2 | 1.2 | 1.2 |
| | Silane coupling agent *6 | | 2 | 2 | 2 | 2 | 2 |
| Evaluation | Low loss property | Index | 100 | 72 | 76 | 80 | 81 |
| | Wear resistance | | 100 | 126 | 128 | 136 | 131 |

**[Table 5]**

| | | | Comparative Example 6 | Example 7 | Example 8 | Example 9 | Example 10 |
|---|---|---|---|---|---|---|---|
| Formulation | Natural rubber (NR) | Parts by mass | 30 | 30 | 30 | 30 | 30 |
| | Polymer A | | 0 | 70 | 0 | 70 | 0 |
| | Polymer B | | 0 | 0 | 70 | 0 | 70 |
| | Polymer C | | 70 | 0 | 0 | 0 | 0 |
| | Carbon black *1 | | 25 | 25 | 40 | 40 | 45 |
| | Silica *2 | | 25 | 25 | 20 | 20 | 15 |
| | Stearic acid | | 2 | 2 | 2 | 2 | 2 |
| | Wax *3 | | 1 | 1 | 1 | 1 | 1 |
| | Antioxidant *4 | | 1 | 1 | 1 | 1 | 1 |
| | Zinc oxide | | 3 | 3 | 3 | 3 | 3 |
| | Vulcanization accelerator *5 | | 1 | 1 | 1 | 1 | 1 |
| | Sulfur | | 1.2 | 1.2 | 1.2 | 1.2 | 1.2 |
| | Silane coupling agent *6 | | 2 | 2 | 2 | 2 | 2 |
| Evaluation | Low loss property | Index | 100 | 70 | 79 | 80 | 85 |
| | Wear resistance | | 100 | 130 | 141 | 139 | 145 |

| | | | | | | | |
|---|---|---|---|---|---|---|---|
| *1 Carbon black: trade name "SEAST 3", manufactured by Tokai Carbon Co., Ltd. *2 Silica: trade name "NIPSIL AQ", manufactured by Tosoh Silica Corporation *3 Wax: "SUNTIGHT A", manufactured by Seiko-Chemical Co., Ltd. *4 Antioxidant: trade name "NOCRAC 6C", manufactured by Ouchi Shinko Chemical Industrial Co., Ltd. *5 Vulcanization accelerator: trade name "Nocceler CZ", manufactured by Ouchi Shinko Chemical Industrial Co., Ltd. *6 Silane coupling agent: bis(3-triethoxysilylpropyl)disulfide | | | | | | | |

From Table 3 to Table 5, it is understood that the rubber compositions of the examples according to this disclosure had greatly improved low loss property and wear resistance.

On the other hand, from Table 2, it is understood that in the case of using merely a modified conjugated diene-based polymer having a hydroxyl group at a terminal as rubber component without combining with a natural rubber and/or a polyisoprene rubber, the degree of improvement of low loss property and wear resistance was smaller.

### INDUSTRIAL APPLICABILITY

The rubber composition of this disclosure can be used in various rubber products starting with tire.

## Claims

1. A rubber composition comprising: a modified conjugated diene-based polymer having a hydroxyl group at a terminal; and at least one of a natural rubber or a polyisoprene rubber.

2. The rubber composition according to claim 1, wherein:
the modified conjugated diene-based polymer has a cis-1,4 bond content of 95% or more.

3. The rubber composition according to claim 1 or 2, wherein:
the modified conjugated diene-based polymer has a molecular weight distribution (Mw/Mn) of 2.5 or less.

4. The rubber composition according to any one of claims 1 to 3, wherein:
a content of the modified conjugated diene-based polymer in a rubber component is 20 mass% or more.

5. The rubber composition according to any one of claims 1 to 4, wherein:
the modified conjugated diene-based polymer is a modified butadiene polymer.

6. The rubber composition according to any one of claims 1 to 5, further comprising carbon black and silica.

7. The rubber composition according to claim 6, wherein:
a content of the carbon black is more than a content of the silica.

8. The rubber composition according to claim 7, wherein:
the content of the carbon black is more than 2 times of the content of the silica.

9. A crosslinked rubber composition, being a crosslinking product of the rubber composition according to any one of claims 1 to 8.

10. A rubber product using the rubber composition according to any one of claims 1 to 8 or the crosslinked rubber composition according to claim 9.

11. The rubber product according to claim 10, being a tire.
